# DEMANDE DE BREVET EUROPEEN

(11) **EP 1 072 838 A1**
(43) Date de publication de la demande: **31.01.2001**
(21) Numéro de dépôt: 00402149.9
(22) Date de dépôt: 27.07.2000
(51) Int. Cl.: F16L 37/20, E04G 21/04

(54) **Dispositif de raccordement de tuyau sur une paroi percée d'un orifice**

(30) Priorité: 28.07.1999 FR 9909984
(71) Demandeur: Lancy Mixjet, 33360 Latresne (FR)
(72) Inventeur: Vidal, Lucien, 33360 Latresne (FR)
(74) Mandataire: Dronne, Guy

(57) **Abrégé**

L'invention concerne un dispositif de raccordement de tuyau sur une paroi percée d'un orifice. Le dispositif comprend un raccord (4), emmanché à l'extrémité du tuyau (2), de diamètre d dont la tête (6) présente un épaulement de diamètre D supérieur à d ; un flasque (8) dans lequel est ménagé un évidement oblong dont au moins une partie a une largeur comprise entre D et d, monté articulé selon un des bords du flasque (8) sur un des bords de la paroi comportant l'orifice, par quoi le raccord peut être engagé à travers l'évidement et l'épaulement peut prendre appui sur les bords de l'évidement ; au moins un organe de verrouillage (34) pour maintenir le flasque (8) parallèle à la paroi (29) de façon que la tête (6) du raccord (4) soit en appui sur le pourtour de l'orifice (24).

## Description

La présente invention concerne un dispositif de raccordement de tuyau sur un réceptacle dont la paroi est percée d'un orifice, et notamment pour le raccordement d'un tuyau transportant des matériaux granuleux ou pâteux.

Les matériaux pulvérulents ou les mortiers peuvent être transportés dans des canalisations sous pression d'air. Certaines canalisations sont constituées d'éléments unitaires présentant une extrémité mâle en forme de rotule et une extrémité femelle en forme de coquille. Les éléments unitaires sont raccordés hermétiquement et fixés par des crochets et un levier de verrouillage solidaire de l'extrémité formant coquille, lesdits crochets se fixant sur l'extrémité formant rotule.

Pour réaliser le transport de ces matériaux, on dispose d'une cuve dans laquelle on réalise éventuellement un mélange des produits à transporter, et d'un compenseur pour mettre la cuve sous pression. Le mélange est réalisé au moyen de pales de malaxage internes à la cuve et la mise sous pression est rendue possible par des fermetures hermétiques.

Une vanne, fixée sur la cuve et sur laquelle est emmanché un tuyau, permet de commander l'éjection du matériau à travers la tuyauterie et de le transporter à l'endroit où on le souhaite.

Cependant, le matériau est propulsé par l'air sous pression dans les canalisations et la réception, à l'extrémité de la canalisation, est relativement délicate.

Pour amortir l'impact du jet de matériau ou de mortier et le répandre sur le sol, on fait déboucher l'extrémité de la canalisation dans la partie latérale d'un réceptacle en forme de cloche dont l'ouverture est dirigée vers le sol.

Le réceptacle est maintenu au-dessus du sol par des pieds escamotables sur la paroi latérale duquel est fixée l'extrémité d'un élément unitaire de canalisation comprenant une partie femelle en forme de coquille munie de crochets et d'un levier de verrouillage.

Cet élément est soudé sur le pourtour d'un évidement circulaire percé dans la paroi.

Ce dispositif est relativement lourd et encombrant et rend difficile le maniement du réceptacle. Par ailleurs, lorsque la canalisation est fixée sur le réceptacle, il est difficile de le déplacer de par les contraintes de torsion que celle-ci lui impose.

Un objet de la présente invention est de fournir un dispositif de raccordement peu encombrant d'un tuyau sur un réceptacle qui permet le déverrouillage de l'extrémité de ce tuyau tout en maintenant celui-ci attaché au réceptacle.

Pour atteindre ce but, conformément à l'invention, le dispositif de raccordement de tuyau sur le réceptacle, dont la paroi est percée d'un orifice se caractérise en ce qu'il comprend :
- un raccord, emmanché à l'extrémité du tuyau, de diamètre d dont la tête présente un épaulement de diamètre D supérieur à d,
- un flasque dans lequel est ménagé un évidement oblong dont au moins une partie a une largeur comprise entre D et d, monté articulé selon un des bords du flasque sur un des bords de la paroi comportant l'orifice, par quoi le raccord peut être engagé à travers l'évidement et l'épaulement peut prendre appui sur les bords de l'évidement,
- au moins un organe de verrouillage pour maintenir le flasque parallèle à la paroi de façon que la tête du raccord soit en appui sur le pourtour de l'orifice.

Avantageusement, un joint entoure l'orifice de la paroi du réceptacle sur sa face externe.

Le joint va permettre de réaliser l'étanchéité entre la tête du raccord emmanchée à l'extrémité du tuyau et l'orifice de la paroi du réceptacle.

Pour cela, la tête du raccord est maintenue contre le joint au moyen d'un flasque pivotant dans lequel un évidement est ménagé, et verrouillé dans la partie opposée à l'axe de pivotement.

On comprend que les bords de l'évidement constituent une butée pour l'épaulement de la tête du raccord et qu'ainsi le flasque maintient la tête du raccord contre le joint.

Lorsque le flasque est déverrouillé, la tête du raccord est toujours prisonnière du flasque et donc solidaire du réceptacle mais elle peut jouer au moins en rotation. Ainsi, le déplacement du réceptacle est rendu plus aisé. En outre, le dispositif de raccordement est plus compact et plus léger ce qui facilite le transport du réceptacle seul.

Avantageusement, le dispositif de raccordement se caractérise en ce que la tête du raccord se termine par un épaulement cylindrique.

Ainsi, le raccord est appliqué sur le joint et le comprime de manière à réaliser l'étanchéité.

Selon un mode préféré de réalisation, la tête du raccord se termine par un épaulement en forme de rotule et, par conséquent, la tête est forcée à travers le joint.

Une autre caractéristique de l'invention réside dans la forme de l'évidement oblong dont la largeur de la première extrémité est au moins égale à D et dont la largeur de la deuxième extrémité est au moins égale à d.

Cette caractéristique permet d'introduire la tête du raccord présentant l'épaulement de largeur D à travers l'extrémité de l'évidement oblong de largeur D et de glisser la partie de raccord de largeur d dans la deuxième extrémité de l'évidement oblong de largeur d.

L'évidement oblong est, selon un mode de réalisation préféré, sensiblement perpendiculaire au bord articulé du flasque, et ledit flasque est articulé selon son bord inférieur vers lequel est dirigée l'extrémité de l'évidement oblong de plus faible largeur.

En conséquence, lorsque le raccord est glissé dans l'extrémité de l'évidement de largeur d et que le flasque est maintenu verticalement, l'extrémité du tuyau et le raccord sont maintenus dans l'évidement sous l'effet de leur poids, face à l'orifice du réceptacle.

Pour maintenir le flasque contre la paroi du réceptacle, on prévoit un organe de verrouillage comprenant un excentrique sur lequel est fixé un crochet dans lequel s'engage une bride solidaire de l'extrémité du flasque opposée à l'articulation.

D'autres particularités et avantages de l'invention ressortiront à la lecture de la description ci-après, à titre indicatif mais non limitatif, en référence aux dessins annexés sur lesquels :
- la Figure 1 est une vue latérale en élévation du dispositif de raccordement dans laquelle le tuyau muni du raccord est engagé dans le flasque dans la position déverrouillée,
- la Figure 2 est une vue de face du flasque, dans lequel est ménagé l'évidement oblong,

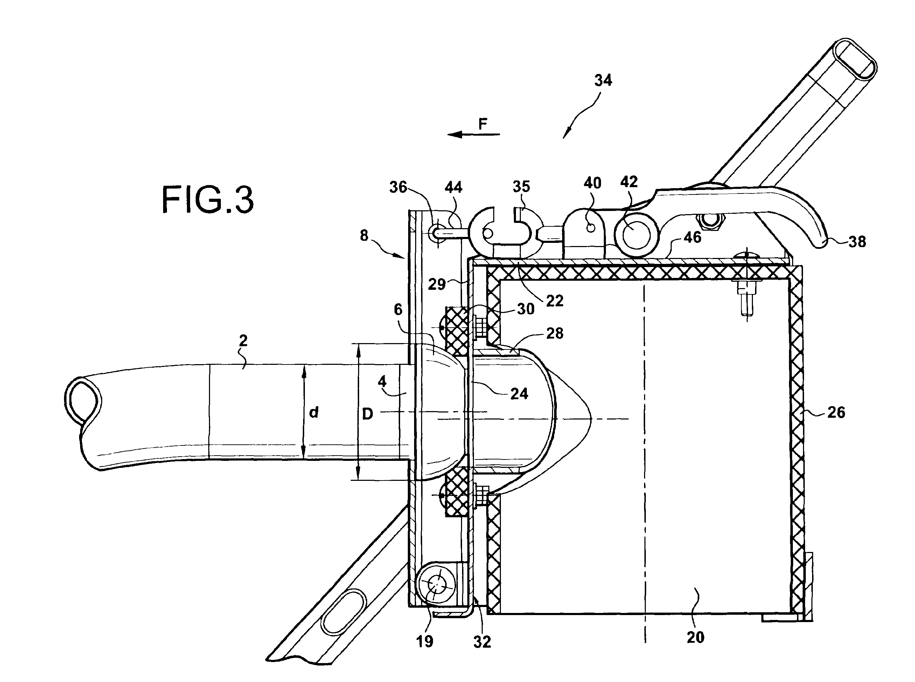

- la Figure 3 est une vue latérale en élévation du dispositif de raccordement dans laquelle le tuyau muni du raccord est engagé dans le flasque dans la position verrouillée, et
- la Figure 4 est une vue de dessus en élévation du dispositif de raccordement dans laquelle le tuyau muni du raccord est engagé dans le flasque dans la position verrouillée et excentrée par rapport au réceptacle.

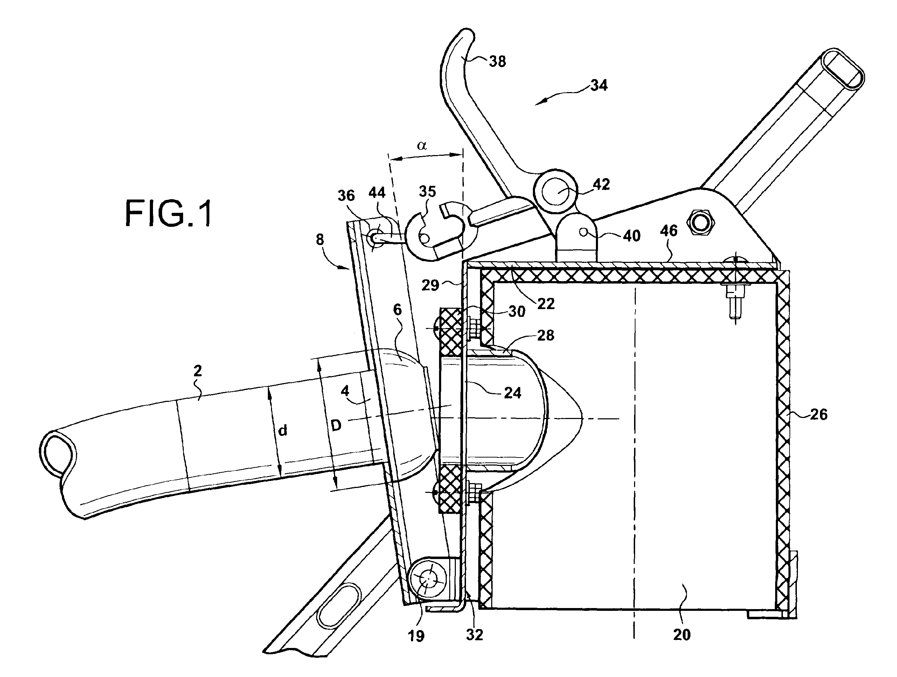

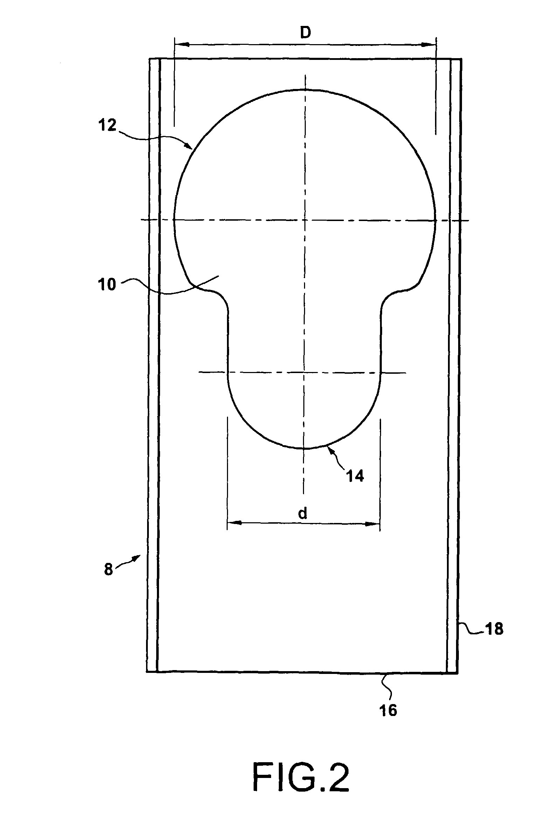

En se référant à la Figure 1 et à la Figure 2, on va décrire un mode de réalisation du dispositif de raccordement.

On a représenté sur la Figure 1, le tuyau 2 emmanché sur un raccord 4, la tête 6 du raccord 4 présentant une forme de rotule.

Il va de soi que le raccord et le tuyau ont une symétrie cylindrique et que le diamètre D de la tête 6 constituant l'épaulement est supérieur au diamètre d du raccord 4.

Le raccord 4 et le tuyau 2 sont engagés dans le flasque 8 dont la description qui suit est faite en référence à la Figure 2.

Ce flasque 8 est constitué d'une pièce métallique plane de forme rectangulaire dont deux bords opposés sont recourbés à 90° par rapport à la face plane de manière à rigidifier la pièce.

Un évidement oblong 10 est ménagé dans le flasque 8 et comprend deux extrémités de largeurs différentes.

La première extrémité 12 a une largeur au moins égale à D de sorte que la tête du raccord 6 ayant un diamètre égal à D peut être introduite à travers le flasque 8 et la deuxième extrémité 14 a une largeur au moins égale à d de sorte que la partie du raccord 4 de diamètre d peut y être engagée.

Bien évidemment, l'espace entre les deux évidements 12 et 14 a une largeur comprise entre d et D, de façon que le raccord puisse passer entre l'extrémité 12 et l'extrémité 14.

Ainsi, le raccord 4 prolongeant le tuyau 2 est engagé à travers le flasque 8 dans la partie de l'évidement oblong 10 de plus grande largeur jusqu'à ce que la totalité de l'épaulement traverse le flasque 8. Ensuite, le raccord 4 est glissé dans la partie de l'évidement 14 de plus faible largeur. De la sorte, les bords de l'évidement 14 constituent un appui pour l'épaulement de la tête du raccord 4.

En conséquence, dans cette configuration, le raccord 4 est maintenu par le flasque 8.

L'axe 19, parallèle au bord inférieur 16 du flasque 8 et à la paroi 29, coopère à la fois avec ce bord inférieur 16 et avec la paroi pour constituer une charnière.

Le réceptacle 20 en forme de cloche est constitué d'une structure métallique 22 sur une des parois latérales de laquelle est percé un orifice 24, et une structure en matière souple 26 encastrée dans la structure métallique 22.

Cette structure, en matière souple du type caoutchouc, présente également un orifice correspondant à l'orifice 24 de la structure métallique 22.

Les deux structures sont maintenues ensemble l'une dans l'autre par des systèmes vis/écrou.

L'orifice 24 percé dans le flanc de la structure métallique 22 est prolongé par un élément tubulaire 28 débouchant à travers l'orifice de la structure souple 26.

Contre la paroi externe 29 de la structure métallique 22 on prévoit avantageusement un joint 30 fixé sur le pourtour de l'orifice 24.

Ce joint 30 permet d'assurer l'étanchéité entre la tête 6 du raccord 4 engagée dans le flasque 8, et la structure métallique 22 lorsque le flasque 8 est maintenu contre la paroi du réceptacle. L'adjonction du joint 30 n'est toutefois pas nécessaire au bon fonctionnement du dispositif de raccordement selon l'invention.

L'articulation 19 relie l'extrémité inférieure du flasque 8 à l'extrémité inférieure 32 de la paroi externe 29 de la structure métallique 22.

Ainsi le flasque 8 pivote autour de l'articulation 19 de sorte que la tête 6 du raccord 4 maintenue dans la deuxième extrémité 14 de l'évidement oblong 10 s'applique contre le pourtour du joint 30. De cette manière, le raccord 4 est en liaison étanche avec la structure métallique 22.

Pour assurer le pivotement du flasque 8 et son maintien contre la paroi externe 29, il est prévu un organe de verrouillage 34. Cet organe de verrouillage comprend l'excentrique sur lequel est fixé le crochet dans lequel s'engage la bride 44 solidaire de l'extrémité 36 du flasque 8 opposée à l'articulation 19.

L'excentrique est constitué d'un levier 38 pivotant sur un axe 40 et sur lequel le crochet 35 est articulé selon un axe 42.

A l'extrémité 36 du flasque 8, une bride 44 est fixée de sorte que le crochet 35 maintient l'extrémité 36 du flasque.

Afin d'appliquer la tête 6 du raccord 4 contre le joint 30 de l'orifice 24, on rabat le levier 38 contre la paroi supérieure 46 de la structure métallique 22.

L'appui élastique constitué par le joint 30 communique au crochet 35 une force F opposée au sens de verrouillage dont la direction passe par l'axe du crochet 42 et la bride 44, au-dessous de l'axe 40 du levier, permettant de maintenir le levier 38 dans une position rabattue.

En référence à la Figure 1, on comprend que l'organe de verrouillage présente l'avantage de maintenir le flasque 8, lorsqu'il est déverrouillé, dans une position angulaire déterminée a par rapport à la paroi 29 de la structure métallique.

Ainsi, dans cette position, le tuyau 2 prolongé du raccord 4 est facilement escamotable et, surtout, le réceptacle est plus facilement déplaçable puisque le raccord 4 peut jouer au moins en rotation dans le flasque 8.

Après le déplacement du réceptacle, le raccord est verrouillé à nouveau sur la paroi externe 29 de la structure métallique, par simple action du levier.

On comprend également que le réceptacle est aisément transportable en absence de connexion avec le tuyau 2. En effet, le dispositif de raccordement est compact et léger par rapport aux dispositifs antérieurs.

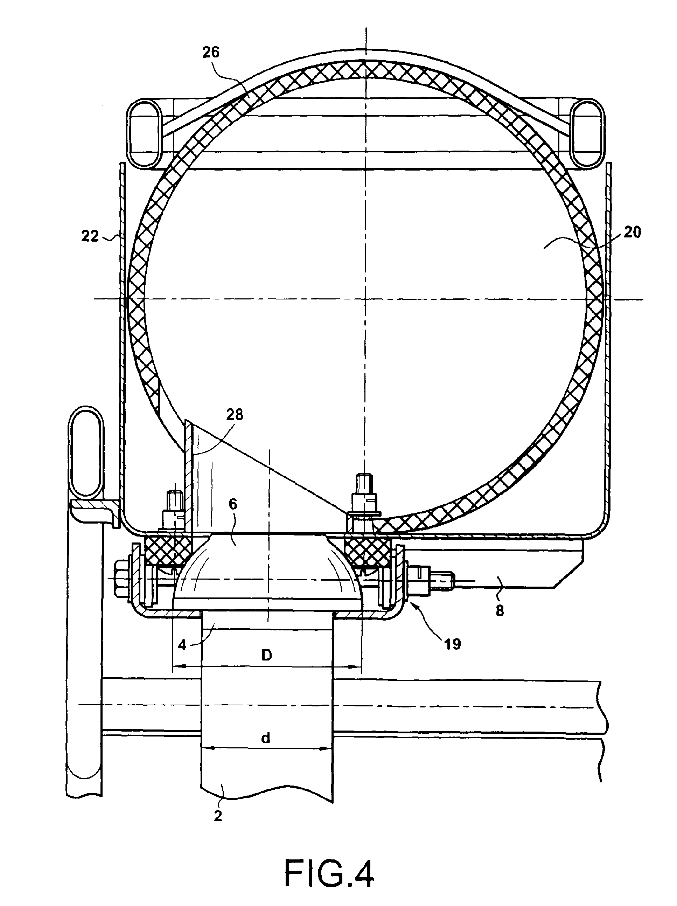

Selon un mode de réalisation particulier, en se référant à la Figure 4, l'orifice 24 est percé excentré par rapport au réceptacle 20. Cette disposition permet d'amortir l'impact sur la paroi interne de la structure souple du matériau provenant du tuyau 2.

On comprend que l'impact d'un matériau projeté selon une direction perpendiculaire à une paroi est moins amorti que lorsqu'il est projeté selon une direction inclinée par rapport à ladite paroi.

Selon un autre mode de réalisation particulier, l'évidement oblong du flasque 8 a une largeur au moins égale à d et débouche sur un des bords du flasque.

Ainsi la partie de diamètre d du raccord 4 est engagée directement dans l'évidement oblong. La largeur de l'évidement est constante et les bords constituent également une butée pour l'épaulement de la tête 6 du raccord.

Selon une utilisation particulière, le dispositif de raccordement conforme à l'invention convient parfaitement aux tuyauteries pour le transport du mortier. Ainsi, le raccord est emmanché à l'extrémité du tuyau de transport et fixé sur un réceptacle en forme de cloche apte à répandre le mortier sur le sol.

Un transporteur malaxeur injecte sous pression le mortier dans une canalisation terminée par un raccord à rotule. Ce raccord est fixé sur un réceptacle au moyen d'un dispositif de raccordement, conformément à l'invention.

Ainsi le mortier est répandu sur le sol pour constituer la chape.

Il va de soi que l'on ne sortirait pas du cadre de l'invention en utilisant le dispositif de raccordement pour le transport de tout autre matériau.

## Revendications

1. Dispositif de raccordement de tuyau sur une paroi percée d'un orifice, caractérisé en ce qu'il comprend :
- un raccord (4), emmanché à l'extrémité du tuyau (2), de diamètre d dont la tête (6) présente un épaulement de diamètre D supérieur à d,
- un flasque (8) dans lequel est ménagé un évidement (10) oblong dont au moins une partie a une largeur comprise entre D et d, monté articulé selon un des bords du flasque sur un des bords de la paroi comportant l'orifice, par quoi le raccord peut être engagé à travers l'évidement (10) et l'épaulement peut prendre appui sur les bords de l'évidement,
- au moins un organe de verrouillage (34) pour maintenir le flasque (8) parallèle à la paroi (29) de façon que la tête (6) du raccord (4) soit en appui sur le pourtour de l'orifice.

2. Dispositif de raccordement selon la revendication 1, caractérisé en ce qu'il comprend en outre un joint (30) entourant l'orifice (24) de la paroi (29) sur sa face externe.

3. Dispositif de raccordement selon la revendication 1, caractérisé en ce que la tête (6) du raccord (4) se termine par un épaulement cylindrique.

4. Dispositif de raccordement selon la revendication 1, caractérisé en ce que la tête (6) du raccord (4) se termine par un épaulement en forme de rotule.

5. Dispositif de raccordement selon l'une quelconque des revendications 1 à 4, caractérisé en ce que la largeur de la première extrémité (12) de l'évidement oblong (10) est au moins égale à D et en ce que la largeur de la deuxième extrémité (14) de l'évidement oblong (10) est au moins égale à d.

6. Dispositif de raccordement selon l'une quelconque des revendications 1 à 4, caractérisé en ce que l'évidement oblong (10) a une largeur au moins égale à d et en ce qu'il débouche sur l'un des bords du flasque (8).

7. Dispositif de raccordement selon l'une quelconque des revendications 1 à 6, caractérisé en ce que l'évidement oblong (10) est sensiblement vertical, l'extrémité découpée dont la largeur est comprise entre D et d étant dirigée vers le bas.

8. Dispositif de raccordement selon l'une quelconque des revendications 1 à 7, caractérisé en ce que l'organe de verrouillage (34) comprend un excentrique sur lequel est fixé un crochet dans lequel s'engage une bride (44) solidaire de l'extrémité (36) du flasque (8) opposée à l'articulation (19).

9. Dispositif de raccordement selon l'une quelconque des revendications 1 à 8, caractérisé en ce que l'orifice (24) est percé excentré par rapport au réceptacle (20).

10. Dispositif de raccordement selon l'une quelconque des revendications 1 à 9, caractérisé en ce que le raccord (4) est emmanché à l'extrémité d'un tuyau de transport de mortier et fixé sur le réceptacle (20) en forme de cloche apte à répandre le mortier sur le sol.
